# EUROPEAN PATENT APPLICATION

(11) **EP 2 466 792 A1**
(43) Date of publication of application: **20.06.2012**
(21) Application number: 10788705.1
(22) Date of filing: 21.04.2010
(51) Int. Cl.: H04L 12/24

(54) **INTERNET ACCESS CONTROL APPARATUS, METHOD AND GATEWAY THEREOF**

(30) Priority: 25.09.2009 CN 200910190609
(71) Applicant: ZTE Corporation, Shenzhen, Guangdong 518057 (CN)
(72) Inventor: PENG, Kai, Shenzhen Guangdong518057 (CN)
(74) Representative: Lettau, Christoph
(86) International application number: PCT/CN2010/072014
(87) International publication number: WO 2010/145309

(57) **Abstract**

An Internet access control apparatus is provided by the present invention and includes: an agent module for intercepting and parsing a request sent from a terminal to Internet; a strategy management module for judging whether the user information contained in the request matches with a control strategy; wherein, the agent module is also used to decide whether to permit the terminal to access Internet according to a matching result. An Internet access control method and gateway thereof are also correspondingly provided by the present invention. Through performing strategy control for the information which can be used to distinguish users and is carried in a domain name parse request and for a time period, the present invention can conveniently and effectively control the terminal accessing Internet.

## Description

### Technical Field

The present invention relates to the Internet access control technology, and more especially, to an Internet access control apparatus and method and a gateway thereof.

### Background of the Related Art

Generally, there are multiple terminals (e.g., computers) which can access to Internet in an office or a house. For example, parents, children and grandparents in a family all have their own computers for net surfing. These computers in the family generally access to the Internet through a gateway.

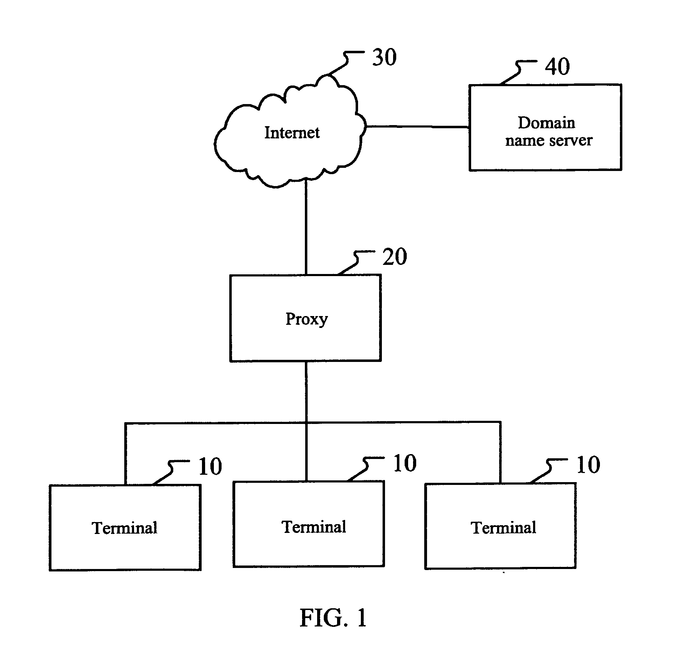

FIG. 1 is a schematic diagram illustrating that multiple terminals 10 access to the Internet, 30 through a proxy 20. The proxy 20 may be a device, such as a gateway, a computer with proxy function and a router. The terminals 10 need to parse a domain name into a protocol address of the Internet 30 through a domain name server 40 before accessing to the Internet 30. The existing proxy 20 has no function of controlling the terminals 10 to access to the Internet 30, such as the function of controlling the right of the terminals 10 to access to a certain website and a period of time in which the terminals 10 access to the Internet 30, thus resulting in the problem that the staff in office browse web pages irrelevant to work on the Internet regardless of regulations of the company or children indulge in the Internet, etc.

Therefore, the problem required to be solved at present is how to design an Internet access control apparatus and method to effectively control a terminal's access to the Internet.

### Summary of the Invention

An object of the present invention is to provide an Internet access control apparatus and method and a gateway thereof so as to solve the problem that a proxy can not control a terminal's access to the Internet in the existing technology.

The present invention provides an Internet access control apparatus comprising a proxy module and a policy management module; wherein
the proxy module is configured to intercept and parse a request sent by a terminal to Internet, and determine whether to allow the terminal to access to the Internet according to a determining result of the policy management module; and
the policy management module is configured to determine whether user information contained in the request parsed by the proxy module matches a control policy.

The terminal is located in a local area network.

The request sent by the terminal to the Internet is a domain name parsing request sent by the terminal to a domain name server.

The proxy module comprises a message processing submodule configured to discard the domain name parsing request or configured to send the domain name parsing request to the domain name server, and send a parsing result of the domain name parsing request parsed by the domain name server to the terminal.

The proxy module further comprises a message parsing submodule configured to parse the request to acquire the user information contained in the request.

The user information includes an identifier of the terminal and time at which the request is sent.

The identifier of the terminal is an Internet protocol address, a media access control address or a name of the terminal in the local area network.

The policy management module is configured with a control policy table including the identifier of the terminal and time at which the terminal is allowed to access to the Internet.

The policy management module determining whether the user information contained in the request parsed by the proxy module matches the control policy means that: the policy management module makes the determination by querying the identifier of the terminal and the time at which the terminal is allowed to access to the Internet.

The present invention further provides a gateway comprising an Internet access control apparatus, the Internet access control apparatus comprising an proxy module and a policy management module; wherein

the proxy module is configured to intercept and parse a request sent by a terminal to Internet, and determine whether to allow the terminal to access to the Internet according to a determining result of the policy management module; and
the policy management module is configured to determine whether user information contained in the request parsed by the proxy module matches a control policy.

The terminal is located in a local area network.

The request sent by the terminal to the Internet is a domain name parsing request sent by the terminal to a domain name server.

The proxy module comprises a message processing submodule configured to discard the domain name parsing request or configured to send the domain name parsing request to the domain name server, and send a parsing result of the domain name parsing request parsed by the domain name server to the terminal.

The proxy module further comprises a message parsing submodule configured to parse the request to acquire the user information contained in the request.

The user information includes an identifier of the terminal and time at which the request is sent.

The identifier of the terminal is an Internet protocol address, a media access control address or a name of the terminal in the local area network.

The policy management module is configured with a control policy table including the identifier of the terminal and time at which the terminal is allowed to access to the Internet.

The policy management module determining whether the user information contained in the request parsed by the proxy module matches the control policy means that: the policy management module makes the determination by querying the identifier of the terminal and the time at which the terminal is allowed to access to the Internet.

The present invention further provides an Internet access control method comprising:
a proxy intercepting and parsing a request sent by a terminal to Internet;
the proxy determining whether user information contained in the request matches a control policy; and
the proxy determining whether to allow the terminal to access to the Internet according to a determining result.

The terminal is located in a local area network, and the request is a domain name parsing request sent to a domain name server.

If the proxy does not allow the terminal to access to the Internet, the proxy discards the domain name parsing request directly; and If the proxy allows the terminal to access to the Internet, the proxy sends the domain name parsing request to the domain name server, which parses the domain name parsing request and sends a parsing result to the terminal through the proxy.

The user information contained in the request includes an identifier of the terminal and time at which the request is sent.

The proxy is configured with a control policy table including the identifier of the terminal and time at which the terminal is allowed to access to the Internet.

The proxy determines whether the user information contained in the request matches the control policy by querying the identifier of the terminal and the time at which the terminal is allowed to access to the Internet.

The Internet access control apparatus and method and the gateway thereof in accordance with the present invention can perform policy control over user identity information and a period of time contained in the request (e.g., a domain name parsing request) sent by the terminal to the Internet through the proxy, so as to conveniently and effectively control the terminal's access to the Internet.

### Brief Description of Drawings

FIG. 1 is a schematic diagram illustrating that multiple terminals access to the Internet through a proxy;
FIG. 2 is a block diagram of an Internet access control apparatus according to one embodiment of the present invention;
FIG. 3 is a flow diagram of an Internet access control method according to one embodiment of the present invention; and
FIG. 4 is a flow diagram of an Internet access control method according to another embodiment of the present invention.

### Preferred Embodiments of the Present Invention

The technical scheme of the present invention will be further described in detail in combination with the accompanying drawings and specific examples below such that those skilled in the art can understand the present invention better and implement the present invention, but the given embodiments are not intended to limit the present invention.

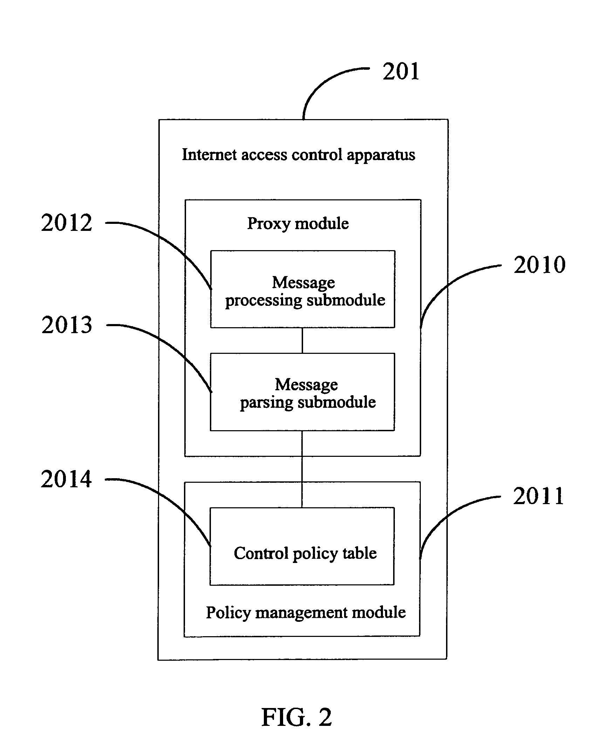

FIG. 2 is a block diagram of an Internet access control apparatus according to one embodiment of the present invention. The Internet access control apparatus 201 located in a proxy 20 is configured to control a terminal 10 located in a local area network to access to the Internet 30. The proxy 20 may be a device, such as a gateway, a computer with proxy function and a router, and the terminal 10 may be a personal computer or other devices which may access to the Internet. As shown in FIG. 2, the Internet access control apparatus 201 comprises a proxy module 2010 and a policy management module 2011.

The proxy module 2010 is configured to intercept and parse a request sent by the terminal 10 to the Internet 30.

The policy management module 2011 is configured to determine whether user information contained in the request parsed by the proxy module 2010 matches a control policy.

The proxy module 2010 is further configured to determine whether to allow the terminal 10 to access to the Internet 30 according to a determining result of the policy management module 2011.

In this embodiment, the control policy is to control the terminal 10 to access to the Internet according to an identifier of the terminal 10 and time at which the terminal 10 requests to access to the Internet. The identifier of the terminal 10 may be an Internet Protocol (IP) address, Media Access Control (MAC) address or the name of the terminal 10 in the local area network, etc.

In this embodiment, the request sent by the terminal 10 to the Internet 30 is a domain name parsing request, which is sent to a domain name server 40 in the Internet 30.

The proxy module 2010 comprises a message processing submodule 2012 and a message parsing submodule 2013.

The message processing submodule 2012 is configured to discard the domain name parsing request, or is configured to send the domain name parsing request to the domain name server 40, and send a parsing result of the domain name parsing request parsed by the domain name server 40 to the terminal 10.

The message parsing submodule 2013 is configured to parse the request to acquire the user information contained in the request, wherein the user information includes the identifier of the terminal 10 and time at which the request is sent, and the identifier of the terminal 10 is an Internet protocol address, media access control address or the name of the terminal 10 in the local area network.

The policy management module 2011 is configured with a control policy table 2014 including a control policy. Specifically, the control policy table 2014 includes the identifier of the terminal 10 and the time at which the terminal 10 is allowed to access to the Internet, and the policy management module 2011 determines whether the user information contained in the request sent by the terminal 10 matches the control policy by querying the identifier of the terminal 10 and the time at which the terminal 10 is allowed to access to the Internet 30 to control the terminal 10's access to the Internet 30.

The function of the policy management module 2011 will be further described in conjunction with specific embodiments.

### The first embodiment

The case where the policy management module 2011 disallows the terminal 10 to access to the Internet 30 according to the control policy in the control policy table 2014 will be described below.

It is assumed that the control policy in the control policy table 2014 configured for the terminal 10 with the IP address being 192.168.1.3 in the local area network is that: this IP address is not allowed to access to the Internet 30 from 22:00 PM to next 8:00 AM. At the point, if the terminal 10 wants to access to a server with a domain name of www.wowchina.com in the Internet 30 at 23:00 PM in order to access the website of World of Warcraft, the following Internet access control method in accordance with the present invention is used in which the terminal 10 is controlled according to the control policy.
1. The terminal 10 initiates a domain name parsing request carrying a domain name of www.wowchina.com to request the domain name server 40 to parse the domain name, and the domain name parsing request is intercepted by the proxy module 2010.
2. The message parsing submodule 2013 parses the domain name parsing request to obtain the original IP address 192.168.1.3 of the terminal 10 which sends the request, while knowing that the time at which the request is sent is 23:00 PM after a query.
3. The policy management module 2011 queries the control policy in the preconfigured control policy table 2014, and finds that the control policy matches the control policy.
4. The message processing submodule 2012 directly discards the request.
5. The terminal 10 can not access to the Internet 30 as it has not received a response to the request.

### The second embodiment

The case where the policy management module 2011 allows the terminal 10 to access to the Internet 30 according to the control policy in the control policy table 2014 will be described below.

It is assumed that the control policy in the control policy table 2014 configured for the terminal 10 with the IP address being 192.168.1.2 in the local area network is that: this IP address is allowed to access to the Internet 30 at any time each day. At the point, if the terminal 10 wants to access a server with a domain name of www.baidu.com in the Internet 30 in order to access the website of Baidu at 23:00 PM, the following Internet access control method in accordance with the present invention is used in which the terminal 10 is controlled according to the control policy.
1. The terminal 10 initiates a domain name parsing request carrying a domain name of www.baidu.com to request the domain name server 40 to parse the domain name, and the domain name parsing request is intercepted by the proxy module 2010.
2. The message parsing submodule 2013 parses the domain name parsing request to obtain the original IP address 192.168.1.2 of the terminal 10 which sends the request, while knowing that the time at which the request is sent is 23:00 PM after a query.
3. The policy management module 2011 queries the control policy in the preconfigured control policy table 2014, and finds that the control policy does not match the control policy.
4. The message processing submodule 2012 sends the request to the domain name server 40.
5. The domain name server 40 parses the domain name in the request into a corresponding IP address to send to the terminal 10.
6. The terminal 10 starts to access to the Internet 30 after obtaining the IP address corresponding to the domain name.

The present invention further provides a gateway, which, in this embodiment, in addition to an Internet access control apparatus 201 as shown in FIG. 1, comprises other modules, functions of which are the same as those of the existing gateway.

Specifically, the Internet access control apparatus 201 located in a proxy 20 is configured to control the terminal 10 located in the local area network to access to the Internet 30. The proxy 20 may be a device, such as a gateway, a computer with proxy function and a router, and the terminal 10 may be a personal computer or other devices which may access to the internet. The Internet access control apparatus 201 comprises a proxy module 2010 and a policy management module 2011.

The proxy module 2010 is configured to intercept and parse a request sent by the terminal 10 to the Internet 30.

The policy management module 2011 is configured to determine whether the user information contained in the request parsed by the proxy module 2010 matches a control policy.

The proxy module 2010 is further configured to determine whether to allow the terminal 10 to access to the Internet 30 according to a determining result of the policy management module 2011.

In this embodiment, the control policy is to control the terminal 10 to access to the Internet according to an identifier of the terminal 10 and time at which the terminal 10 requests to access to the Internet. The identifier of the terminal 10 may be an Internet Protocol (IP) address, Media Access Control (MAC) address or the name of the terminal 10 in the local area network, etc.

In this embodiment, the request sent by the terminal 10 to the Internet. 30 is a domain name parsing request, which is sent to a domain name server 40 in Internet 30.

The proxy module 2010 comprises a message processing submodule 2012 and a message parsing submodule 2013.

The message processing submodule 2012 is configured to discard the domain name parsing request, or is configured to send the domain name parsing request to the domain name server 40, and send a parsing result of the domain name parsing request parsed by the domain name server 40 to the terminal 10.

The message parsing submodule 2013 is configured to parse the request to acquire the user information contained in the request, wherein the user information includes the identifier of the terminal 10 and time at which the request is sent, and the identifier of the terminal 10 is an Internet protocol address, media access control address or the name of the terminal 10 in the local area network.

The policy management module 2011 is configured with a control policy table 2014 including a control policy. Specifically, the control policy table 2014 includes the identifier of the terminal 10 and the time at which the terminal 10 is allowed to access to the Internet, and the policy management module 2011 determines whether the user information contained in the request sent by the terminal 10 matches the control policy by querying the identifier of the terminal 10 and the time at which the terminal 10 is allowed to access to the Internet 30 to control the terminal 10's access to the Internet. 30.

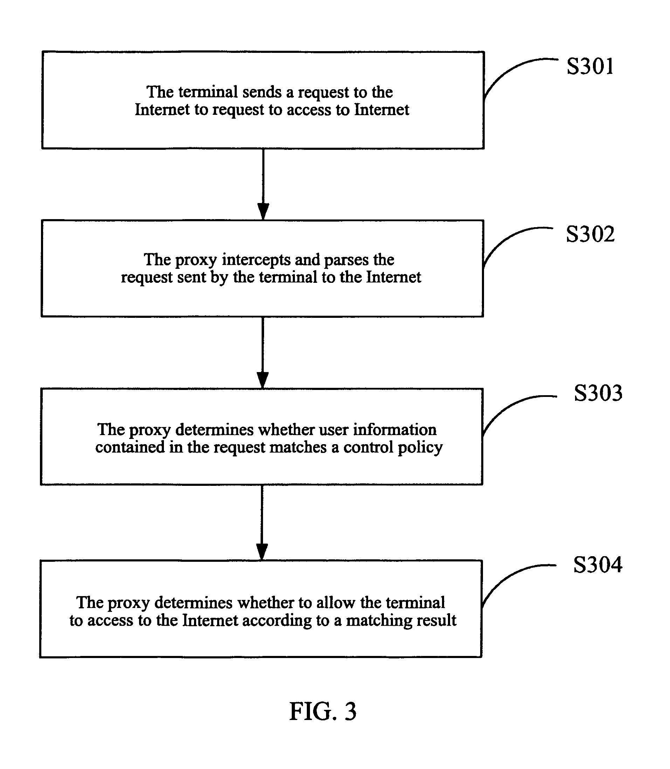

FIG. 3 is a flow diagram of an Internet access control method according to one embodiment of the present invention. As shown in FIG. 3, the method comprises the following steps.

In step S301, the terminal 10 sends a request to the Internet 30 to request to access to the Internet 30.

In this embodiment, the terminal 10 is located in the local area network, and the request sent by the terminal 10 to the Internet 30 is a domain name parsing request, which is sent to the domain name server 40 in the Internet 30.

In step S302, the proxy 20 intercepts and parses the request sent by the terminal 10 to the Internet 30.

The proxy 20 parses the request in order to acquire user information contained in the request. The user information includes the identifier of the terminal 10 and time at which the request is sent. The identifier of the terminal 10 may be an Internet Protocol (IP) address, Media Access Control (MAC) address or the name of the terminal 10 in the local area network, etc.

In step S303, the proxy 20 determines whether the user information contained in the request matches the control policy.

In this embodiment, the proxy 20 is configured with a control policy table 2014 including the identifier of the terminal 10 and time at which the terminal 10 is allowed to access to the Internet. The proxy 20 determines whether the user information contained in the request sent by the terminal 10 matches the control policy by querying the identifier of the terminal 10 and the time at which the terminal 10 is allowed to access to the Internet 30 to control the terminal's 10 access to the Internet 30.

In step S304, the proxy 20 determines whether to allow the terminal 20 to access to the Internet 30 according to a matching result.

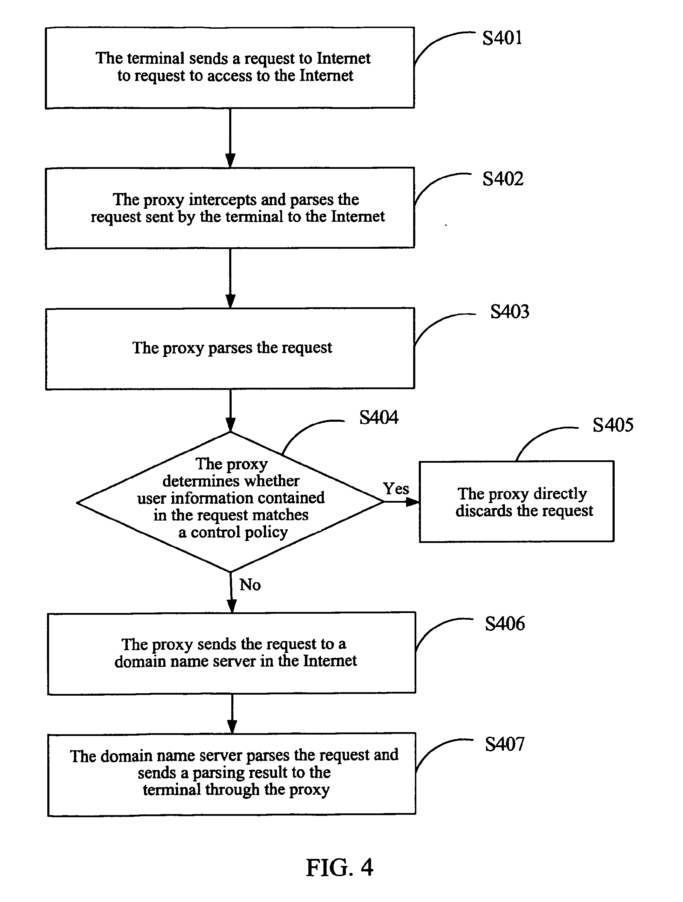

FIG. 4 is a flow diagram of an Internet access control method according to another embodiment of the present invention. As shown in FIG. 4, the method comprises the following steps.

In step S401, the terminal 10 sends a request to the Internet 30 to request to access to the Internet 30.

In this embodiment, the terminal 10 is located in the local area network, and the request sent by the terminal 10 to the Internet 30 is a domain name parsing request, which is sent to the domain name server 40 in the Internet 30.

In step S402, the proxy 20 intercepts and parses the request sent by the terminal 10 to the Internet 30.

In step S403, the proxy 20 parses the request.

In this embodiment, the proxy 20 parses the request in order to acquire user information contained in the request. The user information includes the identifier of the terminal 10 and time at which the request is sent. The identifier of the terminal 10 may be an Internet Protocol (IP) address, Media Access Control (MAC) address or the name of the terminal 10 in the local area network, etc.

In step S404, the proxy 20 determines whether the user information contained in the request matches the control policy; and if yes, steps S405 is performed and the proxy 20 directly discards the request; if not, step S406 is performed.

In this embodiment, the proxy 20 is configured with a control policy table 2014 including the identifier of the terminal 10 and time at which the terminal 10 is allowed to access to the Internet. The proxy 20 determines whether the user information contained in the request sent by the terminal 10 matches the control policy by querying the identifier of the terminal 10 and the time at which the terminal 10 is allowed to access to the Internet 30 to control the terminal 10's access to the Internet 30.

In step S407, the domain name server 40 parses the request and sends a parsing result to the terminal 10 through the proxy 20.

It can be seen from the embodiment described above that the Internet access control apparatus 201 and the Internet access control method and the gateway thereof in accordance with the present invention can perform policy control over user identity information and a period of time contained in the domain name parsing request through the proxy 20, so as to conveniently and effectively control the terminal 10's access to the Internet 30.

The above description is only the preferred embodiments of the present invention and is not intended to limit the present invention. Various equivalent modifications to the structure and procedure of the present invention made using the specification and accompanying drawings of the present invention may be applied directly or indirectly in other related art and should be covered in the protection scope of the present invention.

## Claims

1. An Internet access control apparatus, the device comprising: an proxy module and a policy management module; wherein,
the proxy module, is configured to intercept and parse a request sent by a terminal to Internet, and determine whether to permit the terminal to access to the Internet according to a determining result of the policy management module;
the policy management module, is configured to determine whether the user information contained in the request parsed by the proxy module matches a control policy.

2. The Internet access control apparatus according to claim 1, wherein, the terminal is configured in a local area network,
the request sent by the terminal to Internet is a domain name parsing request sent by the terminal to a domain name server.

3. The Internet access control apparatus according to claim 2, wherein, the proxy module comprises a message processing submodule, which is configured to discard the domain name parsing request; or is configured to send the domain name parsing request to the domain name server, and send a parsing result of the domain name server parsing the domain name parsing request to the terminal.

4. The Internet access control apparatus according to claim 3, wherein, the proxy module further comprises a message parsing submodule, which is configured to parse the request to acquire user information contained in the request,
the user information comprises an identifier of the terminal and time of sending the request; and
the identifier of the terminal is an Internet protocol address, a media access control address or a name of the terminal in the local area network.

5. The Internet access control apparatus according to claim 4, wherein, the policy management module is configured with a control policy table, and the control policy table comprises the identifier of the terminal and time of permitting the terminal to access to the Internet.

6. The Internet access control apparatus according to claim 4 or 5, wherein, the policy management module determining whether the user information contained in the request parsed by the proxy module matches a control policy is: the policy management module performing judgment through querying the identifier of the terminal and time of permitting the terminal to access to the Internet.

7. A gateway, the gateway comprising an Internet access control apparatus, and the Internet access control apparatus comprising: an proxy module and a policy management module; wherein,
the proxy module, is configured to intercept and parse a request sent by a terminal to Internet; and determine whether to permit the terminal to access to the Internet according to a determining result of the policy management module;
the policy management module, is configured to determine whether the user information contained in the request parsed by the proxy module matches a control policy.

8. The gateway according to claim 7, wherein, the terminal is configured in a local area network,
the request sent by the terminal to Internet is a domain name parsing request sent by the terminal to a domain name server.

9. The gateway according to claim 8, wherein, the proxy module comprises a message processing submodule, which is configured to discard the domain name parsing request; or is configured to send the domain name parsing request to the domain name server, and sent a parsing result of the domain name server parsing the domain name parsing request to the terminal.

10. The gateway according to claim 9, wherein, the proxy module further comprises a message parsing submodule, which is configured to parse the request to acquire the user information contained in the request,
the user information comprises an identifier of the terminal and time of sending the request; and
the identifier of the terminal is an Internet protocol address, a media access control address or a name of the terminal in the local area network.

11. The gateway according to claim 10, wherein, the policy management module is configured with a control policy table, and the control policy table comprises the identifier of the terminal and time of permitting the terminal to access to the Internet.

12. The gateway according to claim 10 or 11, wherein, the policy management module determining whether the user information contained in the request parsed by the proxy module matches a control policy: the policy management module performing judgment through querying the identifier of the terminal and time of permitting the terminal to access to the Internet.

13. An Internet access control method, the method comprising:
an proxy intercepting and parsing a request sent by a terminal to Internet;
the proxy determining whether the user information contained in the request matches a control policy; and
the proxy determining whether to permit the terminal to access to the Internet according to a matching result.

14. The Internet access control method according to claim 13, wherein, the terminal is configured in a local area network, and the request is a domain name parsing request sent to a domain name server.

15. The Internet access control method according to claim 14, wherein, when not permitting the terminal to access to the Internet, the proxy directly discards the domain name parsing request; when permitting the terminal to access to the Internet, the proxy sends the domain name parsing request to the domain name server, and the domain name server parses the domain name parsing request and sends the parsing result to the terminal through the proxy.

16. The Internet access control method according to claim 15, wherein, the user information contained in the request comprises an identifier of the terminal and time of sending the request.

17. The Internet access control method according to claim 16, wherein, the proxy is configured with a control policy table, and the control policy table comprises the identifier of the terminal and time of permitting the terminal to access to the Internet.

18. The Internet access control method according to claim 16 or 17, wherein, the proxy determines whether the user information contained in the request matches a control policy through querying the identifier of the terminal and time of permitting the terminal to access to the Internet.
